(19) Europäisches Patentamt
European Patent Office
Office européen des brevets

(11) Veröffentlichungsnummer: **0 603 657 A2**

# (12) EUROPÄISCHE PATENTANMELDUNG

(21) Anmeldenummer: **93119830.3**

(51) Int. Cl.[5]: **G01N 27/333**, G01N 21/64

(22) Anmeldetag: **09.12.93**

(30) Priorität: **23.12.92 CH 3947/92**

(43) Veröffentlichungstag der Anmeldung: **29.06.94 Patentblatt 94/26**

(84) Benannte Vertragsstaaten: **AT CH DE FR GB IT LI NL**

(71) Anmelder: **Willi Möller AG**
**Gubelstrasse 37**
**CH-8050 Zürich(CH)**

(72) Erfinder: **Kuratli, Matthias**
**Agnesstrasse 46**
**CH-8406 Winterthur(CH)**

(74) Vertreter: **Blum, Rudolf Emil Ernst et al**
**c/o E. Blum & Co**
**Patentanwälte**
**Vorderberg 11**
**CH-8044 Zürich (CH)**

## (54) Sensor zur Bestimmung von Sulfiten in flüssigen oder gasförmigen Medien und Verfahren zu dessen Herstellung.

(57) Es werden Sensoren zur Bestimmung von Sulfiten, beziehungsweise schwefeliger Säure, beziehungsweise Schwefeldioxid in flüssigen oder gasförmigen Medien beschrieben, die in einem Polymermaterial einen Adduktbildner für schwefelige Säure, Sulfitanionen, beziehungsweise Bisulfitanionen, enthalten, der ein ein- oder mehrkerniger aromatischer, beziehungsweise heteroaromatischer Aldehyd ist. Vorzugsweise weist der in dem Polymermaterial enthaltene Aldehyd lipophile Eigenschaften auf, und es werden neue entsprechende Aldehyde beschrieben, die als Adduktbildner in den entsprechenden Sensoren eingesetzt werden können.

Die Sensoren können zur elektrometrischen Bestimmung von schwefeliger Säure, Sulfit oder Bisulfit in wässrigen Medien herangezogen werden, und es ist auch eine rasche colorimetrische Bestimmung dieser Bestandteile möglich, falls der adduktbildende Aldehyd einechromophore und/oder Fluoreszenz hervorrufende Gruppe aufweist oder falls zusätzlich ein lipophiler pH-Indikator in dem Sensor enthalten ist. Es werden auch entsprechende neue lipophile pH-Indikatoren beschrieben.

EP 0 603 657 A2

## HINTERGRUND DER ERFINDUNG

Die vorliegende Erfindung betrifft einen Sensor zur Bestimmung von Sulfiten, beziehungsweise schwefeliger Säure, beziehungsweise Schwefeldioxid in flüssigen oder gasförmigen Medien, der eine einfache quantitative Bestimmung von Sulfiten ermöglicht, und zwar entweder eine elektrometrische Bestimmung oder bevorzugt eine Bestimmung durch Aenderung der Absorption des Sensors im sichtbaren Bereich, im ultravioletten Bereich oder im infraroten Bereich der Wellenlängen, die feststellbar ist, sobald der Sensor mit Wasser enthaltenden Lösungen von Sulfiten, insbesondere Hydrogensulfit, beziehungsweise schwefeliger Säure, in Berührung gebracht wurde.

Die erfindungsgemässen Sensoren enthalten in einem Polymermaterial einen aromatischen, beziehungsweise heteroaromatischen Aldehyd, vorzugsweise einen entsprechenden Aldehyd mit lipophilen Eigenschaften, der in der Lage ist, reversibel mit den Bisulfitanionen, beziehungsweise Sulfitanionen der Probelösung Addukte zu bilden, sobald dieser Sensor mit der Probelösung in Berührung kommt.

## BESCHREIBUNG DES STANDES DER TECHNIK

Bereits in der Antike wurde Schwefeldioxid zur Desinfektion und insbesondere zur Konservierung von Nahrungsmitteln aufgrund seiner Mikroorganismen abtötenden Wirkung eingesetzt, und beispielsweise wurden leere Weinfässer ausgeschwefelt (Abbrennen von Schwefel in den leeren Weinfässern unter Bildung von Schwefeldioxid) ehe in diesen erneut Traubensaft zu Wein vergoren, beziehungsweise in diese Wein abgefüllt wurde.

Auch in der heutigen Zeit wird Schwefeldioxid als Konservierungsmittel, beziehungsweise Antioxidans in vielen Nahrungsmitteln eingesetzt, beispielsweise in Fruchtsäften, Fruchtsirupen, konservierten Gewürzen, wie geriebenem Meerrettich oder zerkleinertem Knoblauch, Sauerkraut und insbesondere in Dörrfrüchten, wie getrockneten Aprikosen oder Trauben.

Sulfite sind jedoch in Nahrungsmitteln und Genussmitteln nicht nur aufgrund der Zugabe derselben als Konservierungsmittel enthalten, sondern sie können auch in den Nahrungsmitteln durch mikrobielle Reduktion von ursprünglich in den Produkten enthaltenen Sulfaten gebildet werden. Insbesondere bei fermentierten Nahrungsmitteln oder Genussmitteln, wie Wein, werden Sulfite auch durch eine derartige mikrobielle Reduktion von Sulfaten gebildet.

Sulfite können in den Nahrungsmitteln in unterschiedlicher Form vorliegen, nämlich als sogenannte "freie Sulfite", zu denen Schwefeldioxid, Bisulfitanionen, Sulfitanionen und Metabisulfitanionen, gezählt werden, sowie als gebundene Sulfite. Zu den gebundenen Formen der Sulfite, die in den Nahrungsmitteln vorhanden sind, gehören die Carbonylsulfonate, die durch eine reversible Reaktion von Aldehyden und Ketonen des Nahrungsmittels mit dem Sulfit gebildet werden, und diese Carbonylsulfonate stehen also im entsprechenden Nahrungsmittel im Gleichgewicht mit den freien Sulfiten. Des weiteren können jedoch in den Nahrungsmitteln auch irreversibel gebundene Sulfite vorhanden sein. Genauere Erläuterungen über die in Nahrungsmitteln vorkommenden freien, reversibel gebundenen und irreversible gebundenen Sulfiten sind in der Veröffentlichung von B.L. Wedzicha, "Chemistry of Sulphur Dioxide in Foods" (Elsevier, London, 1984), Seiten 141-142, aufzufinden, und auf den Seiten 43-46 dieser Veröffentlichung wird ferner darauf hingewiesen, dass das Gleichgewicht zwischen freien Sulfiten und Carbonylsulfonaten in Nahrungsmitteln stark vom pH-Wert derselben abhängig ist, und zwar wird unter sauren Bedingungen, nämlich im pH-Bereich von 3-7, die Stabilität der Carbonylsulfonate begünstigt, während unter stark alkalischen Bedingungen das Gleichgewicht in Richtung der freien Sulfite verschoben wird, und unter stark sauren Bedingungen, nämlich bei pH-Werten von 2 und weniger, die Zersetzung der Carbonylsulfonate unter Freisetzung der Sulfite ebenfalls gefördert wird.

Mit der Nahrung aufgenommene Sulfite werden im lebenden Organismus üblicherweise rasch abgebaut, insbesondere ist in den Lebern von Säugetieren und Vögeln eine Sulfitoxydase vorhanden, nämlich ein aus zwei Untereinheiten aufgebautes Molybdän enthaltendes Protein eines Molekulargewichts von etwa 114'000, das in der Lage ist, Sulfit in Gegenwart von Sauerstoff zu Sulfat zu oxydieren.

Aufgrund des raschen Abbaus von Sulfit im Organismus der warmblütigen Tiere und auch aufgrund der jahrhundertelangen Verwendung von Sulfit als Konservierungsmittel, wurde dieses bis vor kurzem allgemein als harmlos angesehen, und deshalb sind in vielen Ländern in Nahrungsmitteln hohe Sulfitkonzentrationen aufgrund der entsprechenden Bestimmungen des jeweiligen Lebensmittelrechtes zulässig.

Nach der derzeit in der Schweiz gültigen Verordnung für Lebensmittel und Gebrauchsgüter, sind beisspielsweise in getrockneten Aprikosen Höchstmengen von 2'000 mg $SO_2$ pro kg und in übrigen Trockenfrüchten, sowie Baummüssen, 1'000 bis 1'500 mg $SO_2$ pro kg zulässig. Auch in anderen Nahrungs- und Genussmitteln, wie Meerrettich, Gewürzpasten auf Basis von Knoblauch, Sardellen oder ähnlichem,

Senffrüchten, Sauerkraut, sauren Rüben und Trockengemüsen, sind Höchstmengen von 500 mg $SO_2$ pro kg des jeweiligen Nahrungs- oder Genussmittels in der Schweiz zulässig. Reine Fruchtsäfte, wie Traubensaft, Apfelsaft und Birnensaft, dürfen in der Schweiz maximal 80 mg $SO_2$ pro Liter, verdünnte entsprechende Fruchtsäfte und Fruchsirupe immer noch maximal 40 mg $SO_2$ pro Liter, beziehungsweise kg enthalten.

Erst im Jahre 1985 wurde überraschenderweise festgestellt, dass für bestimmte Gruppen der Bevölkerung, nämlich für Personen, die unter Asthma leiden, Gesundheitsrisiken auftreten können, wenn diese Sulfite mit der Nahrung aufnehmen, und es wurden Zustände festgestellt, wie Benommenheit, Einengung der Atemwege, Hautrötungen, erhöhter Puls und ähnliches. Ebenfalls wurden in den USA im Zeitraum von 1985 bis 1987 dreizehn Todesfälle und 500 Fälle von schwerwiegenden Nebenreaktionen bei Asthmatikern auf die Aufnahme von Sulfiten zurückgeführt. Da man annimmt, dass etwa 5 - 10% der Bevölkerung der USA (abhängig von Klima und Wohnlage) unter Asthma leiden, sieht man, dass hohe Sulfitgehalte in Nahrungsmitteln für einen nicht unbeachtlichen Teil der Bevölkerung ein bedeutendes gesundheitliches Risiko darstellen. Aus diesem Grunde wurden auch in den USA die entsprechenden gesetzlichen Bestimmungen rasch geändert, und zwar sind Zugaben von Sulfit zu frischen Früchten und Gemüsen seit Sommer 1986 in den USA generell verboten, ab 1987 müssen in sonstigen Nahrungsmitteln Sulfitgehalte von mehr als 10 mg/kg deklariert werden, unabhängig davon, ob diese natürlich in den entsprechenden Nahrungsmitteln enthalten sind oder künstlich zugesetzt wurden. Es sei in diesem Zusammenhang auf die entsprechenden gesetzlichen Bestimmungen in den USA gemäss der Food and Drug Administration, "Food labeling: Declaration of sulfiting agents," Federal Register 51, 25012 (1986) verwiesen.

Seit langem bekannt ist hingegen, dass sulfithaltige Abwässer, beispielsweise solche, die aus der Zellstoff verarbeitenden Industrie, insbesondere Papierfabriken, stammen, in Gewässern äusserst schädlich sind, weil durch das Sulfit der Sauerstoffgehalt des Wassers stark gesenkt wird. Gemäss den gesetzlichen Bestimmungen in der Schweiz darf Abwasser höchstens 1 mg/l an Bisulfitanionen (berechnet als $HSO_3^-$) enthalten, und Abwasser, das Kläranlagen zugeführt wird, höchstens den zehnfachen Wert davon.

Des weiteren ist auch bekannt, dass Schwefeldioxyd einen bedeutenden Luftschadstoff darstellt, der aufgrund der Oxydation zu Sulfat einen wesentlichen Bestandteil des schädlichen sauren Regens darstellt, der Wälder und Gebäude stark beeinträchtigt. In der Schweiz sind deshalb maximal 100 $\mu$g $SO_2$ pro $m^2$ Luft zugelassen, und bei Gehalten von 200 $\mu$g $SO_2$ pro $m^2$ Luft wird Smogwarnung gegeben, und die Interventionsstufe liegt bei 350 $\mu$g pro $m^3$ Luft.

Aus diesen Erläuterungen sieht man, dass eine rasch durchführbare und verlässliche Bestimmung von Sulfiten, beziehungsweise schwefeliger Säure, beziehungsweise Schwefeldioxid in flüssigen oder gasförmigen Medien sehr wünschenswert wäre.

Ein bisher häufig angewandtes Verfahren zur Bestimmung von Sulfiten in Nahrungsmitteln, ist das sogenannte Monier-Williams Verfahren. Bei diesem werden die Nahrungsmittel angesäuert, aus den angesäuerten Proben wird das Schwefeldioxid abgedampft, anschliessend durch Oxydation, vorzugsweise mit Peroxiden, in Schwefelsäure umgewandelt und diese dann quantitativ bestimmt, beispielsweise durch Titration mit einer Base. Dieses Verfahren ist nicht nur äusserst arbeitsintensiv sondernflüchtige organische Säuren, die bei der Destillation zusammen mit dem Schwefeldioxid in die Probe übergehen, führen zu einer Verfälschung der Werte bei Durchführung einer entsprechenden Basentitration.

Eine Verbesserung des Monier-Williams Verfahrens ist in der Veröffentlichung von J. Greyson und S. Zeller in der Zeitschrift "American Laboratory" vom Juli 1987 auf den Seiten 44 bis 51 beschrieben. Diese Verbesserung des Monier-Williams Verfahrens besteht darin, dass das abdestillierte Schwefeldioxid in einer wässrigen, elementares Jod enthaltenden Lösung zu Schwefelsäure oxydiert wird, wobei das Jod zu Jodid reduziert wird, und die abnehmende Konzentration des freien Jodes colorimetrisch bestimmt wird. Durch dieses Verfahren werden zwar die Fehler, die mit dem Ueberdestillieren flüchtigerorganischer Säuren verbunden sind, vermieden, aber überdestillierte Substanzen, die entweder Jod reduzieren oder Jodid oxydieren, verfälschen hier die Ergebnisse, und ausserdem ist ein destillatives Arbeitsverfahren sehr aufwendig.

Des weiteren sind enzymatische Methoden, beispielsweise solche unter Verwendung einer SulfitoxydaseEnzymelektrode bekannt, und es sei in diesem Zusammenhang auf die Veröffentlichung von V.J. Smith in Anal. Chem., 1987, 59, Seiten 2256-2259 verwiesen. Auch Elektroden, die immobilisierte Mikroorganismen in der gegenüber Sulfit empfindlichen Schicht enthalten, wurden bereits entwickelt, und es sei in diesem Zusammenhang auf die Veröffentlichung von K. Nakamura, A. Yoshifumi und O. Nakayama in Appl. Microbiol. Biotechnol., 1989, 31, Seiten 351-354 verwiesen. Diese Elektroden besitzen jedoch nur eine kurze Lebensdauer, hauptsächlich aufgrund einer Vergiftung des Enzyms, und auch ihre mechanische Beständigkeit ist unbefriedigend.

Es wurde auch bereits vorgeschlagen, die Disproportionierung von Quecksilber (I) in Quecksilber (0) und Quecksilber (II), die durch die Komplexierungsreaktion von Sulfit mit Quecksilber (II) begünstigt wird,

zur quantitativen Bestimmung von Sulfit und Schwefeldioxid heranzuziehen.

In der deutschen Offenlegungsschrift 3 817 732 A1 wird ein kontinuierliches Verfahren zur Bestimmung von Schwefeldioxyd in einem gasförmigen oder flüssigen Medium, unter Verwendung eines Fluoreszenzindikators, beschrieben, der aus der Gruppe der polycyclischen aromatischen Kohlenwasserstoffe und deren Derivate, beziehungsweise der Triphenylmethanfarbstoffe, ausgewählt ist. Beim Kontakt mit dem Schwefeldioxyd erfolgt ein Löschen der Fluoreszenz (siehe den Anspruch 1). Als Beispiele für Derivate von solchen Fluoreszenzindikatoren, die Derivate von polycyclischen aromatischen Kohlenwasserstoffen sind, werden solche genannt, die als Substituenten Alkyl-, Amino-, Hydroxy- oder Alkoxygruppen aufweisen. Dieser Veröffentlichung kann kein Hinweis auf solche Indikatoren entnommen werden, in denen eine Aldehydgruppe direkt an einen aromatischen Kern gebunden ist.

In der US Patentschrift 5 028 394 werden chemische Sensoren beschrieben, die einen Polymerfilm aufweisen, der sich ausdehnt oder zusammenzieht, sobald er mit der zu bestimmenden chemischen Substanz in Berührung kommt und ferner einen Ueberträger, der diese Ausdehnung oder Zusammenziehung in ein elektrisches Signal umwandelt. Vorzugsweise enthält der Sensor mindestens eine funktionelle Gruppe, die aus einer grossen Anzahl von entsprechenden Gruppen ausgewählt ist, und bei der als Beispiel eine Aldehydgruppe genannt ist. Als chemische Substanzen, die mit diesem Sensor in der Umgebung bestimmt werden können, werden die Konzentrationen von Wasserstoffionen, Hydroxylionen und von Uebergangsmetallen, wie Cadmium, Chrom, Kupfer und Eisen genannt, sowie ferner die Konzentration von Bariumionen. Diese Veröffentlichung enthält jedoch keinen Hinweis auf die Bestimmung von Sulfit, Bisulfit oder Schwefeldioxyd mit Hilfe derartiger Sensoren.

In der veröffentlichten europäischen Patentanmeldung 0 358 991 der Firma Willi Möller AG, wird eine Testvorrichtung, beziehungsweise ein Testverfahren, zur optischen Bestimmung der Anwesenheit, beziehungsweise Konzentration, von Kationen, Anionen oder elektrisch neutralen ionogenen Spezien beschrieben, bei der eine Coextraktion von Anionen und Kationen aus der wässrigen Probelösung in die Testvorrichtung erfolgt. Diese Testvorrichtung enthält mindestens einen kationselektiven und/oder anionselektiven lipophilen Ionophor, der mit der zu bestimmenden Komponente in Wechselwirkung tritt, sobald diese mit diesem Ionophor in Berührung kommt. Des weiteren muss der Ionophor eine chromophore Gruppe aufweisen, die dabei ihre optischen Eigenschaften ändert, oder es muss in der Testvorrichtung eine weitere Komponente vorhanden sein, die bei Anwesenheit der zu bestimmenden Komponente ihre optischen Eigenschaften ändert. Anhand von Beispielen wird die Bestimmung von Carbonatanionen, beziehungsweise verschiedener Kationen, wie Natrium, Calcium und Ammonium, erläutert. Dieser Veröffentlichung ist jedoch kein Hinweis auf die Bestimmung von Schwefeldioxyd, Sulfitanionen, beziehungsweise Bisulfitanionen, zu entnehmen.

Des weiteren wurde von D. Pranitis und M.E. Meyerhoff in Anal. Chim. Acta, 1989, 217, 123-133 ein Verfahren zur Bestimmung von Sulfit und Bisulfit unter Verwendung einer sulfitselektiven Membranelektrode, basierend auf dem Quecksilber (II) Komplex des Diethyldithiocarbamate der Formel $Hg(DDC)_2$ entwikkelt. Dieses System wird durch lipophile Anionen gestört, dennoch ist aber eine Bestimmung der Sulfite in Anwesenheit von Perchloraten und Salicylaten möglich.

Die elektrometrische Bestimmung von Sulfitanionen mit Hilfe von Membranelektroden, ist jedoch anfällig gegenüber elektromotorischen und elektromagnetischen Störungen.

Ziel der vorliegenden Erfindung war es, ein neues System zur Bestimmung von Schwefeldioxid, Sulfit, beziehungsweise Bisulfit, zu entwickeln, das sowohl eine elektrometrische Bestimmung dieser Bestandteile als auch eine einfache colorimetrische Bestimmung dieser Bestandteile ermöglicht. Ueberraschenderweise zeigte es sich, dass dieses Ziel durch einen Sensor erreicht werden kann, der in einem Polymermaterial einen Adduktbildner für Sulfitionen, beziehungsweise Hydrogensulfit, enthält.

## BESCHREIBUNG DER ERFINDUNG

Ein Gegenstand der vorliegenden Erfindung ist daher ein Sensor zur Bestimmung von Sulfiten, beziehungsweise schwefeliger Säure, beziehungsweise Schwefeldioxid in flüssigen oder gasförmigen Medien, der dadurch gekennzeichnet ist, dass dieser Sensor in einem Polymermaterial als Adduktbildner für Sulfitanionen, beziehungsweise Bisulfitanionen einen aromatischen, beziehungsweise heteroaromatischen Aldehyd enthält, vorzugsweise einen entsprechenden aromatischen, beziehungsweise heteroaromatischen Aldehyd, bei welchem an den aromatischen, beziehungsweise heteroaromatischen Rest mindestens ein Substituent mit lipophilen Eigenschaften gebunden ist.

Die in den erfindungsgemässen Sensoren verwendeten Polymermaterialien können beliebige Homopolymerisate, beziehungsweise Copolymerisate sein, unter der Voraussetzung, dass der in dem Sensor enthaltene Adduktbildner für Sulfitanionen auf Basis eines aromatischen, beziehungsweise heteroaromatischen Aldehydes in den benötigten Mengen eine ausreichende Löslichkeit in der Polymermatrix besitzt. Als Polymermaterialien sind solche bevorzugt, die frei von hydrophilen Substituenten sind oder nur relativ geringe Anteile an hydrophilen Substituenten, wie Hydroxygruppen oder Carboxylgruppen aufweisen, und da die bevorzugten Polymermaterialien des Sensors dementsprechend stärker lipophile als hydrophile Eigenschaften besitzen, sollen auch die in dem Sensor enthaltenen aromatischen, beziehungsweise heteroaromatischen Aldehyde vorzugsweise lipophile Eigenschaften aufweisen.

Bevorzugte, in dem Sensor enthaltene aromatische Aldehyde, sind solche, die in ihrem Grundgerüst einen oder mehrere aromatische oder heteroaromatische Kerne aufweisen, beispielsweise entsprechende Kerne, die miteinander durch eine direkte Bindung oder einen zweiwertigen Rest verbunden sind, beispielsweise ein Ethersauerstoffatom, eine zweiwertige Gruppierung der Formel -S-, -SO-, $-SO_2-$, eine $CH_2$-Gruppe oder eine Kette von $CH_2$-Gruppen oder einen aliphatischen Rest, der in seiner Kette ein oder mehrere Doppelbindungen oder Dreifachbindungen aufweist, beispielsweise ein oder mehrere Doppelbindungen, die in Konjugation zu dem aromatischen, beziehungsweise heteroaromatischen Kern stehen. Eine bevorzugte zweiwertige Gruppe, welche aromatische, beziehungsweise heteroaromatische Kerne der in dem erfindungsgemässen Sensor enthaltenen Aldehyd verbinden kann, ist die Azogruppe. Des weiteren können ein oder mehrere aromatische oder heteroaromatische Reste der adduktbildenden Aldehyde miteinander durch eine beliebige Kombination der oben erwähnten zweiwertigen Gruppierungen verbunden sein.

Eine weitere bevorzugte Gruppe an aromatischen, beziehungsweise heteroaromatischen Aldehyden, die in den erfindungsgemässen Sensoren enthalten sein können, sind diejenigen, die zwei oder mehrere miteinander kondensierte aromatische Kerne, heteroaromatische Kerne oder beliebige Kombinationen an miteinander kondensierten aromatischen und heteroaromatischen Kernen aufweisen.

Von den heteroaromatischen Kernen sind diejenigen speziell bevorzugt, die in ihrer cyclischen Struktur ein Heteroatom aufweisen, das mindestens ein relativ leicht verschiebbares freies Elektronenpaar besitzt. Dementsprechend sind solche heteroaromatische Kerne speziell bevorzugt, die in ihrem heterocyclischen Grundgerüst mindestens ein Heteroatom aufweisen, welches ein Sauerstoffatom oder ein Schwefelatom ist.

Als spezielle Beispiele für aromatische, beziehungsweise heteroaromatische Kerne der in den erfindungsgemässen Sensoren enthaltenen Aldehyde seien die folgenden genannt:

Benzol, Naphthalin, Anthracen oder Phenanthren, beziehungsweise Furan, Thiophen, Benzofuran und Benzothiophen.

Die aromatischen, beziehungsweise heteroaromatischen Kerne der in den erfindungsgemässen Sensoren enthaltenen Aldehyde, können beliebige Substituenten tragen, und als Beispiele für mögliche Substituenten seien genannt:

Halogenatome, Nitrogruppen, Thiolgruppen, Azogruppen, Ethergruppen, Carbonsäureestergruppen, Sulfonsäureestergruppen, Hydroxygruppen, mit Carbonsäuren oder Sulfonsäuren veresterte Hydroxygruppen, Aminogruppen, Alkylaminogruppen, in welchen die Alkylreste gegebenenfalls substituierte Alkylreste sind, Dialkylaminogruppen, in welchen die Alkylreste gegebenenfalls substituierte Alkylgruppen sind, Arylaminogruppen, beziehungsweise Diarylaminogruppen, in welchen die Arylreste gegebenenfalls weitere Substituenten tragen, Cycloalkylaminogruppen, beziehungsweise Dicycloalkylaminogruppen, in welchen die Cycloalkylgruppen gegebenenfalls Substituenten tragende Cycloalkylrestesind, und als weitere mögliche Substituenten des einkernigen, beziehungsweise mehrkernigen aromatischen, beziehungsweise heteroaromatischen Grundgerüstes der entsprechenden Aldehyde seien Alkylgruppen, substituierte Alkylgruppen, Alkenylgruppen, substituierte Alkenygruppen, Alkinylgruppen, substituierte Alkinylgruppen, Cycloalkylgruppen, substituierte Cycloalkylgruppen, Arylgruppen und substituierte Arylgruppen, sowie auch Nitrilgruppen genannt.

Aus der obigen Aufzählung ist ersichtlicht, dass eine Grosszahl an Substituenten an das aromatische, beziehungsweise heteroaromatische Grundgerüst der in den erfindungsgemässen Sensoren enthaltenen Aldehyde gebunden sein kann, und die einzige Einschränkung, die bezüglich der Substituenten getroffen werden muss, ist diejenige, dass durch allfällige Substituenten die Beständigkeit entsprechender Aldehyde nicht negativ beeinflusst werden darf, und dass die entsprechenden Aldehyde vorzugsweise frei von solchen Substituenten sein sollen, die stark hydrophile Eigenschaften besitzen, wie freie Carboxylgruppen oder freie Sulfonsäuregruppen.

Speziell bevorzugt sind in den erfindungsgemässen Sensoren solche aromatischen, beziehungsweise heteroaromatischen Aldehyde enthalten, bei denen an das aromatische, beziehungsweise heteroaromatische Grundgerüst mindestens ein lipophiler Substituent gebunden ist, der in seiner Struktur mindestens einen aliphatischen Rest mit mindestens 6 Kohlenstoffatomen, einen cycloaliphatischen Rest, einen aromatischen Rest oder eine beliebige Kombination aus aliphatischen, cycloaliphatischen und aromatischen Resten aufweist, beispielsweise einem entsprechenden araliphatischen Rest. Die entsprechenden lipophilen aliphatischen Reste, beziehungsweise cycloaliphatischen Rest, können in ihrer Struktur ein oder mehrere Doppelbindungen aufweisen, und allenfalls kann bei entsprechenden aliphatischen Resten die Kohlenstoffkette auch durch Heteroatome unterbrochen sein, beispielsweise Ethersauerstoffatome, Thioethergruppen oder -SO- oder $-SO_2$-Gruppen.

Die erwähnten aliphatischen, cycloaliphatischen oder aromatischen Reste mit lipophilen Eigenschaften, können an das aromatische, beziehungsweise heteroaromatische Grundgerüst des Aldehydes direkt oder über einen zweiwertigen Rest gebunden sein, beispielsweise eine Ether- oder Thioethergruppe, eine Azogruppe, eine Carbonsäurestergruppe oder eine Sulfonsäureestergruppe.

Speziell bevorzugte, in den erfindungsgemässen Sensoren enthaltene aromatische Aldehyde mit lipophilen Eigenschaften, sind solche Derivate des Benzaldehydes, bei welchen an den Benzolkern mindestens ein Alkylrest mit 10 - 24 Kohlenstoffatomen, direkt, über eine Ethergruppe, eine Thioethergruppe, eine Carbonsäureestergruppe oder eine Sulphonsäureestergruppe gebunden ist, wobei dieser lipophile Substituent vorzugsweise in der Orthostellung oder in der Parastellung zu der Aldehydgruppe des Benzaldehydes gebunden ist. Bei den entsprechenden, lipophile Eigenschaften aufweisenden Carbonsäureestergruppen kann an den Benzolkern des entsprechend substituierten Benzaldehydes entweder eine Hydroxygruppe gebunden sein, die mit einer Carbonsäure der Formel

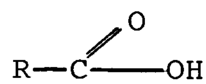

oder einer Sulfonsäure der Formel

$R-SO_3H$

verestert ist, wobei in dieser veresternden Carbonsäure, beziehungsweise Sulfonsäureeinheit der Rest R ein Alkylrest mit 10 - 24 Kohlenstoffatomen ist. Bevorzugt sind jedoch solche Ester der Carbonsäure, beziehungsweise Sulfonsäure, bei denen an den aromatischen Kern eine -COOH-Gruppe, beziehungsweise eine $SO_3H$-Gruppe gebunden ist, und wobei diese Carbonsäure-, beziehungsweise Sulfonsäuregruppen mit einem Alkanol mit 10 - 24 Kohlenstoffatomen verestert sind, bei denen also die entsprechende Carbonsäureestergruppe, beziehungsweise Sulfonsäureestergruppe über die CO-Gruppe, beziehungsweise die $SO_2$-Gruppe, an den Benzolkern gebunden ist.

Zu den eben erwähnten mindestens einen lipophilen aliphatischen Rest tragenden Derivaten des Benzaldehydes gehören auch neue Verbindungen, nämlich diejenigen, in welchen vorzugsweise in den ortho-Stellungen, beziehungsweise in der Parastellung zu der Aldehydgruppe des Benzaldehydes mindestens eine Sulfonsäureestergruppe, beziehungsweise eine Carbonsäureestergruppe gebunden ist, die in ihrer Struktur einen Alkylrest mit 10-24 Kohlenstoffatomen aufweist.

Speziell bevorzugte dieser neuen lipophil substituierten Benzaldehyde, sind diejenigen, welche die folgende Struktur

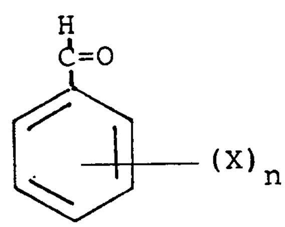

I

aufweisen, wobei in diesen n 1 - 3 bedeutet und X eine Gruppierung der Formel

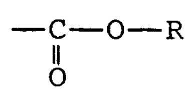

,

beziehungsweise

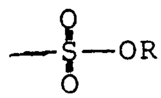

darstellt, wobei diese Carbonsäureestergruppierungen, beziehungsweise Sulfonsäureestergruppierungen in den orthoStellungen und/oder der Parastellung es Benzolkernes, bezogen auf die Aldehydgruppierung, gebunden sind.

Speziell bevorzugt, weisen diese neuen lipophil substituierten Benzaldehydderivate die Formel I, beziehungsweise II,

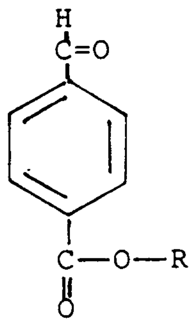

I

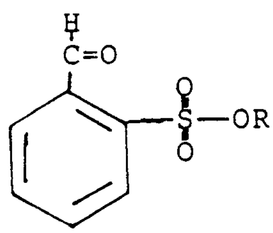

II

auf, wobei in diesen Formeln R ein Alkylrest mit 10-24 Kohlenstoffatomen, vorzugsweise ein entsprechender geradkettiger Alkylrest ist, beispielsweise der n-Octadecylrest.

Das in den erfindungsgemässen Sensoren enthaltene Polymermaterial ist vorzugsweise ein Homopolymerisat oder Copolymerisat, das, wie bereits erwähnt wurde, frei von stark hydrophile Eigenschaften aufweisenden Substituenten ist oder nur geringe Anteile an Substituenten mit stark hydrophilen Eigenschaften, wie Hydroxylgruppen oder Carbonsäureestergruppen, oder Sulfonsäureestergruppen, besitzt. Speziell bevorzugt sind die entsprechenden Homopolymerisate oder Copolymerisate, welche Monomereinheiten aufweisen, die von Alkenen oder Alkinen mit einer oder mehreren Mehrfachbindungen stammen, wobei diese Alkene oder Alkine gegebenenfalls einen oder mehrere Substituenten tragen, die Chloratome, Bromatome, Arylreste, Carbonsäureestergruppen, Carbonsäureamidgruppen, Nitrilgruppen, veresterte oder veretherte Hydroxylgruppen, Ketogruppen, freie oder acetalysierte Aldehydgruppen sind und/oder wobei das Copolymerisat Polyesteranteile, Polyurethananteile, Polyamidanteile und/oder Polycarbonatanteile enthält. Diese Polymermaterialien sind, wie bereits erwähnt wurde, entweder frei von hydrophilen Substituenten, oder es tragen geringe Anteile, vorzugsweise 5-25 Mol-% der Monomereinheiten des Copolymerisates ein oder mehrere hydrophile Substituenten, die Hydroxylgruppen und/oder Carboxylgruppen sind. Entsprechende Polymermaterialien, die Copolymerisate sind, in welchen 5-25 Mol-% der Monomereinheiten des Copolymerisates ein oder mehrere hydrophile Substituenten tragen, die Hydroxylgruppen und/oder Carboxylgruppen sind, sind bereits in der am 22. Juli 1992 erteilten europäischen Patentschrift 321 924 der Firma Willi Möller AG beschrieben. Diese Polymermaterialien besitzen den Vorteil, dass sie im Vergleich zu solchen Polymermaterialien, die frei von hydrophilen Gruppen sind, bei Kontakt mit einem Proteine enthaltenden Material eine stabile Proteinschicht an der Oberfläche anlagern, und dass somit beispielsweise bei der colorimetrischen, beziehungsweise elektrometrischen Bestimmung von irgendwelchen Ionen, unter Verwendung von Sensoren auf Basis eines Polymermateriales und einer darin enthaltenen, für die zu bestimmenden Ionen empfindlichen Komponenten diejenigen Fehler vermieden werden, die durch eine

Instabilität der an die Polymeroberfläche gebundenen Proteinschicht hervorgerufen werden.

Speziell bevorzugte Polymermaterialien der erfindungsgemässen Sensoren sind Homopolymerisate oder Copolymerisate auf Basis von Polyvinylhalogeniden und/oder Polyvinylidenhalogenid, wobei speziell bevorzugt die Halogenatome der Monomereinheiten der entsprechenden Polymerisate Chloratome und/oder allenfalls Bromatome sind. Speziell bevorzugt sind dabei Polyvinylchloridhomopolymerisate oder solche Copolymerisate des Polyvinylchlorides, in welchen 5-25 Mol-% der Monomereinheiten Hydroxylgruppen und/ oder Carboxylgruppen als Substituenten tragen, insbesondere entsprechende Copolymerisate aus Polyvinylchlorid und Polyvinylalkohol, wobei allenfalls in entsprechenden Copolymerisaten noch zusätzliche Substituenten vorliegen können, beispielsweise solche, die Estergruppierungen, Säureamidgruppierungen, Nitrilgruppierungen, Carbonatgruppierungen und/ oder Urethangruppierungen sind. In speziell bevorzugten, schwach hydrophile Eigenschaften aufweisenden Copolymerisaten aus Vinylchlorid und Vinylalkohol, stammen 7-19 Mol-% der Monomereinheiten, insbesondere 11-14 Mol-% der Monomereinheiten des Copolymerisates aus Vinylalkohol, wobei in den entsprechenden Copolymerenallenfalls noch weitere Monomereinheiten vorhanden sind, die Estergruppen, vorzugsweise veresterte Hydroxylgruppen als Substituenten tragen. Diese speziell bevorzugten, hydrophile Substituenten aufweisenden Copolymerisate sind ebenfalls in dem bereits erwähnten europäischen Patent der Firma Willi Möller AG beschrieben.

Im allgemeinen enthalten die erfindungsgemässen Sensoren als weitere Komponenten einen Weichmacher, vorzugsweise einen solchen, der lipophile Eigenschaften aufweist. Bevorzugte, in den Sensoren enthaltene Weichmacher sind Esterweichmacher und Etherweichmacher. Als Beispiele für verwendbare Esterweichmacher seien Dicarbonsäurediester und Tetracarbonsäuretetraester genannt, insbesondere solche, in welchen mindestens einer der esterbildenden Alkohole ein Alkanol mit mindestens 5 Kohlenstoffatomen ist. Als typisches Beispiel für entsprechende Dicarbonsäurediester seien diejenigen der Adipinsäure oder der Sebacinsäure genannt, in welchen die beiden esterbildenden Alkohole jeweils Alkanole mit 5-15 Kohlenstoffatomen, insbesondere solche mit 7-9 Kohlenstoffatomen sind, wie zum Beispiel das Bis(2-ethylhexyl)sebacat (DOS). Als typische Beispiele für verwendbare Tetracarbonsäuretetraester seien die ensprechenden Benzophenontetracarbonsäuretetraester genannt, die in der veröffentlichten europäischen Patentanmeldung 0 219 742 der Firma Willi Möller AG genannt sind, beziehungsweise die entsprechenden Benzhydroltetracarbonsäuretetraester, die in der US Patentschrift 4 857 573 von Prof. Dr. W. Simon beschrieben werden. In den dort erwähnten Benzophenontetracarbonsäuretetraestern, beziehungsweise Benzhydroltetracarbonsäuretetraestern, sind die veresternden Alkoholkomponenten Alkanole, Alkenole oder Alkinole mit 4-24 Kohlenstoffatomen.

Als Beispiel für bevorzugte Etherweichmacher seien solche auf Basis eines Ethers genannt, in welchem an das Ethersauerstoffatom sowohl ein aliphatischer Rest als auch ein aromatischer Rest gebunden ist, beispielsweise ein Nitrophenylalkylether mit 5-15 Kohlenstoffatomen in der Alkylgruppe, wie zum Beispiel der 2-Nitrophenyl-octyl-ether (o-NPOE).

Sensoren, die als weitere Komponente einen Weichmacher enthalten, weisen im allgemeinen, bezogen auf das Gewicht, höhere Gehalte an dem Weichmacher auf als an der Polymerkomponente. Typischerweise enthalten entsprechende Sensoren 30-40 Gew.-% an dem Polymermaterial, beispielsweise Polyvinylchlorid, und 60-70 Gew.-% an dem Weichmacher, beispielsweise einem der oben erwähnten bevorzugten Weichmacher.

Der mit den Sulfitanionen, beziehungsweise Bisulfitanionen Addukte bildende aromatische, beziehungsweise heteroaromatische Aldehyd, ist im allgemeinen in wesentlich geringeren Mengen enthalten. Bevorzugte erfindungsgemässe Sensoren weisen einen Gehalt an dem entsprechenden aromatischen, beziehungsweise heteroaromatischen Aldehyd, von nur 0,02-0,35 Mol/kg, vorzugsweise 0,03-0,09 Mol/kg, insbesondere 0,03-0,08 Mol/kg des Sensors auf, also bezogen auf das Gewicht aus Polymermaterial und dem allenfalls anwesenden Weichmacher.

Da die aromatischen, beziehungsweise heteroaromatischen Aldehyde jedoch selbst als Weichmacher für die Polymerkomponente wirken, könnenentsprechende Sensoren ohne zusätzlichen Weichmacher auch aus 30-50 Gew.-% Polymer und 50-70 Gew.-% Aldehyd aufgebaut sein.

Wie bereits in der europäischen Patentveröffentlichung 358 991 der Firma Willi Möller AG hervorgehoben wurde, ist es bei Testvorrichtungen zur optischen Bestimmung von Anionen, Kationen oder elektrisch neutralen ionogenen Spezien in einer wässrigen Probelösung wichtig, dass diese in dem Trägermaterial eine Komponente enthalten, welche gewährleistet, dass die zu bestimmenden Anionen proportional mit ihrer Aktivität, beziehungsweise Konzentration, in der wässrigen Probelösung in das Trägermaterial eindringen, damit gewährleistet ist, dass sich die optische Eigenschaft der Testvorrichtung proportional mit der Konzentration, beziehungsweise Aktivität, des zu bestimmenden Anions in der wässrigen Probelösung ändert. Wie in dieser europäischen Patentveröffentlichung bereits erwähnt wurde, enthalten die entsprechenden, für Anionen selektiven Testvorrichtungen, zusätzlich zu der mindestens einen anionselektiven

Komponente, noch mindestens einen positiv geladenen Liganden und/oder positiv geladene Stellen des Trägermaterials, deren positive Ladungen mit Anionen elektrisch neutralisiert sind, oder mindestens einen Anionenaustauscher der einen Anionenaustausch von ursprünglich in dem Trägermaterial enthaltenen Anionen gegen die in der wässrigen Lösung zu bestimmenden Anionen bei deren Eintreten in das Trägermaterial gewährleistet.

Somit enthalten bevorzugte erfindungsgemässe Sensoren, insbesondere dann, wenn sie Sensoren zur optischen Bestimmung von schwefeliger Säure, Sulfit- oder Bisulfit-anionen, in wässrigen Lösungen sind, als weitere Komponente in dem Polymermaterial ein Salz, welches ein Kation mit lipophilen Eigenschaften aufweist, und ferner ein Anion, beispielsweise ein Chloridanion, sodass bei dem Kontakt des Sensors mit einer wässrigen Lösung, die schwefelige Säure, Sulfitanionen, bzw. Bisulfitanionen, enthält, das im Sensor vorhandene Anion des Salzes mit lipophilen Eigenschaften gegen die Anionen $HSO_3^-$ oder $SO_3^{2-}$ der wässrigen Lösung ausgetauscht werden.

Bevorzugte, im Sensor enthaltene Salze, die ein Kation mit lipophilen Eigenschaften aufweisen, sind entsprechende Ammoniumsalze, in welchen an das Stickstoffatom des Ammoniumkations mindestens eine Alkylkette mit mindestens 8 Kohlenstoffatomen gebunden ist. Speziell bevorzugte derartige Salze sind quaternäre Ammoniumsalze, in welchen 1, 2 oder 3 derartige langkettige Alkylgruppen an das Stickstoffatom gebunden sind, wie zum Beispiel ein entsprechendes Trialkylammoniumchlorid.

Als spezielles Beispiel für ein derartiges, im Kunststoff zusätzlich enthaltenes quaternäres Ammoniumsalz mit lipophilen Eigenschaften, sei das Methyl-tridodecylammonium-chlorid genannt.

Zusätzlich zu dem Austausch von in dem Sensor enthaltenen Anionen gegen Bisulfitanionen, also $HSO_3^-$ , der wässrigen Probelösung, wurde auch eine Coextraktion von Bisulfitanionen mit $H^+$-Anionen aus der wässrigen Lösung in das Polymermaterial des Sensors beobachtet.

Es wird angenommen, dass im erfindungsgemässen Sensor die Adduktbildung zwischen den im Sensor enthaltenen aromatischen, beziehungsweise heteroaromatischen Aldehyden und den Bisulfitanionen, nach dem folgenden Reaktionsschema abläuft:

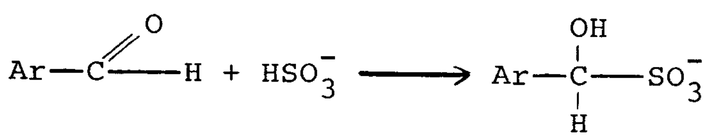

.

Bei dieser Adduktbildung wird also die Konjugation der Carbonylgruppe des aromatischen oder heteroaromatischen Aldehydes zu dem aromatischen, beziehungsweise heteroaromatischen Kern aufgehoben, und dementsprechend findet eine Verschiebung der Absorption im ultravioletten Lichtbereich, beziehungsweise sichtbaren Lichtbereich, in Richtung zu kürzeren Wellenlängen, also eine hypsochrome Verschiebung, statt, wenn der Aldehyd in das Addukt mit den Bisulfitanionen umgewandelt wird.

In erfindungsgemässen Membranen, die als Adduktbildner für Bisfulfitanionen p-Octylbenzaldehyd enthielten, zeigte es sich, dass die für den entsprechenden freien Aldehyd typische Absoroption mit einem Maximum im Wellenlängenbereich von 250-265 nm abnahm, sobald die entsprechende Membran mit gepufferten wässrigen Lösungen eines pH-Wertes von 7,9 in Kontakt gebracht wurde, welche unterschiedliche Konzentrationen an Bisulfitanionen enthielten. Die Abnahme der Absorption in diesem Wellenlängenbereich stieg mit steigender Konzentration in der wässrigen Lösung an, wobei in einem Konzentrationsbereich von

$$\log C_{HSO_3^-}$$

von -4,8 bis auf -1,2 gemessen wurde. Der Kunststoff der Membran, mit der diese Bestimmung durchgeführt wurde, war Polyvinylchlorid, die Membran enthielt als Weichmacher Bis(2-ethylhexyl)sebacat, und sie enthielt ferner 12 Mol-% an Methyl-tridodecylammonium-chlorid, bezogen auf den in der Membran enthaltenen p-Octylbenzaldehyd.

Entsprechende Membranen, die aromatische oder heteroaromatische Aldehyde mit chromophoren Gruppen enthalten, weisen eine Absorption im sichtbaren Bereich der Wellenlängen auf. Mit diesen Membranen ist eine quantitative oder halbquantitative Bestimmung von Sulfitanionen, beziehungsweise Bisulfitanionen, in wässrigen Probelösungen aufgrund einer Entfärbung oder aufgrund einer Farbveränderung oder einer Fluoreszenzbildung oder -löschung möglich.

Wie bereits in der früher erwähnten europäischen Patentveröffentlichung 0 358 991 der Firma Möller AG hervorgehoben wurde, tritt bei der Adduktbildung, beziehungsweise Komplexbildung, zwischen kationselektiven lipophilen Ionophoren, beziehungsweise anionselektiven lipophilen Ionophoren häufig eine Freisetzung oder Aufnahme von Protonen auf, sodass das Ablaufen der entsprechenden Komplexbildungsreaktion auch mit Hilfe eines pH-Indikators quantitativ bestimmt werden kann. Aufgrund der lipophilen Eigenschaften der entsprechenden Polymermaterialien sind pH-Indikatoren mit lipophilen Eigenschaften bevorzugt.

In dieser europäischen Patentveröffentlichung wurde als gegenüber Protonen selektiver, lipophiler Chromoionophor, also als lipophiler pH-Indikator, eine Verbindung der folgenden Formel III

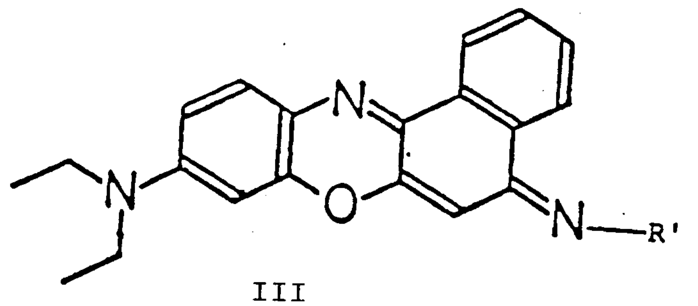

III

eingesetzt, wobei in dieser Formel III

R' ein mindestens 10 Kohlenstoffatome aufweisender aliphatischer Rest ist, der direkt an das Stickstoffatom oder über eine zweiwertige Gruppe gebunden ist, vorzugsweise ein Rest der Formel -CO-R"

oder

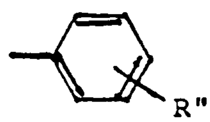

in welcher

R" ein vorzugsweise geradkettiger Alkylrest mit mindestens 10 Kohlenstoffatomen, insbesondere 14-26 Kohlenstoffatomen ist.

Bei der in den erfindungsgemässen Sensoren ablaufenden Adduktbildung zwischen den aromatischen oder heteroaromatischen Aldehyden und dem Sulfitanion, beziehungsweise Bisulfitanion, sind ebenfalls Protonen beteiligt. Somit kann als optischer Indikator für die Bestimmung der Aktivität, beziehungsweise Konzentration, der Sulfitanionen in den wässrigen Probelösungen auch im vorliegenden Fall Ðin gegenüber Protonen selektiver lipophiler Chromoionophor verwendet werden, beispielsweise derjenige der Formel III, der in der erwähnten europäischen Patentschrift beschrieben ist.

Als neue, gegenüber Protonen selektive Chromoionophore, wurden jetzt neue Verbindungen entwickelt, die sehr ähnlich aufgebaut sind, wie die Chromoionophore der oben angegebenen Formel III, wobei jedoch in den neuen Verbindungen der Rest R' ein direkt an das Stickstoffatom gebundener Alkylrest mit 15-20 Kohlenstoffatomen ist, beispielsweise ein entsprechender Alkylrest mit 16 bis 20 Kohlenstoffatomen, wie zum Beispiel ein in der Dreistellung mit n-Octyl substituierter n-Decylrest. Die Herstellung dieses neuen Chromoionophors erfolgte nach einem ähnlichen Verfahren, wie dasjenige, das in der oben erwähnten europäischen Patentveröffentlichung beschrieben ist, ausgehend von Nilblau A, welches in Form der freien Base der Formel III entspricht, wobei R' Wasserstoff ist, durch N-Alkylierung am Stickstoff dieser Iminogruppe.

Es wurden jetzt auch neue lipophile Chromoionophore entwickelt, die bei einer pH-Aenderung ihre Absorption verändern, wobei diese neuen Chromoionophore von Fluorescein (Resorcinphthalein) abgeleitet sind, oder von den bekannten, mit dem Fluorescein nahe verwandten Verbindungen, wie Eosin, Erythrosin und anderen entsprechenden Grundverbindungen. Es sei auf Römpp, Chemielexikon, 9. Auflage, Stichwort "Florescein", Seite 1403 verwiesen. Diese neuen Chromoionophore weisen in ihrer protonierten Form die folgende Formel IV

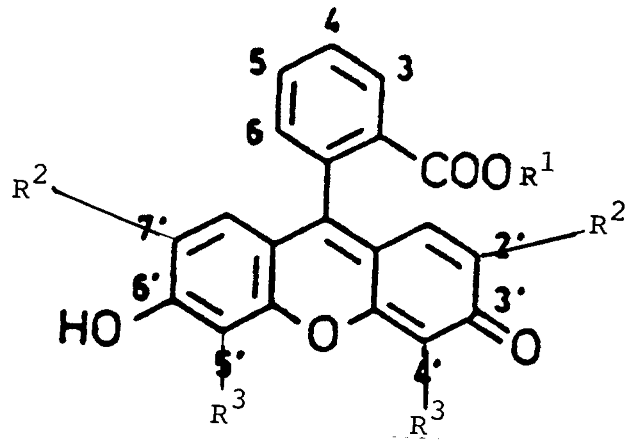

IV

In diesen Verbindungen der Formel IV ist $R^1$ ein lipophiler Rest, vorzugsweise ein aliphatischer Rest mit 10-40 Kohlenstoffatomen, beispielsweise ein n-Octadecylrest oder ein Alkylrest mit 28 Kohlenstoffatomen, beispielsweise der Formel

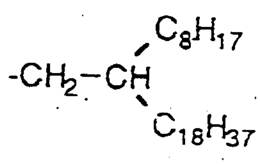

.

Die Substituenten $R^2$ und $R^3$ bedeuten unabhängig voneinander Wasserstoff, Brom oder Jod.

Im Zusammenhang mit den Sensoren, die als weitere Komponente einen gegenüber Protonen selektiven Chromoionophor enthalten, hat sich gezeigt, dass die folgenden Ausführungsformen speziell vorteilhaft sind.

Wenn der gegenüber Protonen selektive Chromoionophor ein Derivat des Nilblaus ist, beispielsweise die Verbindung der weiter vorne angegebenen Formel III, dann ist es zweckmässig, diesen Chromoionophor in einem Sensor einzusetzen, der kein Salz eines lipophilen Kations mit einem austauschbaren Anion enthält.

In diesem Falle findet bei der Bestimmung von Bisulfitanionen in wässrigen Probelösungen eine Coextraktion der $HSO_3^-$ Anionen mit den $H^+$ - Kationen aus der wässrigen Lösung in das Polymermaterial des Sensors statt. Die Bisulfitanionen reagieren nach dem weiter vorne angegebenen Reaktionsmechanismus mit dem aromatischen, beziehungsweise heteroaromatischen Aldehyd, und die quantitative Bestimmung der Sulfitanionen erfolgt aufgrund der Bestimmung der mitextrahierten $H^+$ - Kationen mit dem lipophilen Chromoionophor auf Basis eines Derivates des Nilblaus.

Wird jedoch als gegenüber Protonen selektiver Chromoionophor die protonierte Form eines Fluoresceinderivates eingesetzt, dann ist es zweckmässig, die Bestimmung mit solchen Sensoren durchzuführen, die als weitere Komponente ein Salz mit einem lipophilen Kation und einem leicht austauschbaren Anion enthalten, beispielsweise ein lipophiles Ammoniumchlorid der weiter vorne beschriebenen Art. In diesem Falle reagiert in der Membran die protonierte Form des Fluoresceinderivates mit dem Salz, wobei dessen Anion von der Form $X^-$ in die entsprechende Säure HX übergeführt wird. Im Falle des lipophilen Ammoniumchlorides bildet sich dann das Ammoniumsalz des Fluoresceinderivates, und die entstandene Chlorwasserstoffsäure wird bei der Konditionierung der Membran von der wässrigen Lösung ausgewaschen.

Die bevorzugten erfindungsgemässen Sensoren, die zu einer optischen Bestimmung von Sulfit-, beziehungsweise Bisulfitanionen in wässrigen Medien geeignet sind, zeichnen sich also dadurch aus, dass

entweder der in dem Sensor enthaltene lipophile Eigenschaften aufweisende aromatische, beziehungsweise heteroaromatische Aldehyd eine chromophore Gruppe oder eine eine Fluoreszenz induzierende Gruppe aufweist, sodass bei der Adduktbildung zwischen den Sulfitanionen, beziehungsweise Bisulfitanionen und dem aromatischen, beziehungsweise heteroaromatischen Aldehyd des Sensors eine Verschiebung der Absorption im ultravioletten Lichtbereich oder im sichtbaren Lichtbereich oder eine Löschung einer Fluoreszenz oder das Entstehen einer Fluoreszenz auftritt, oder dass

in dem Sensor als weitere Komponente ein lipophile Eigenschaften aufweisender pH-Indikator oder ein

gegenüber Protonen selektiver Chromoionophor, der eine fluoreszierende Gruppe aufweist, enthalten ist, wobei eine Farbänderung im sichtbaren Bereich oder im ultravioletten Bereich der Wellenlängen oder eine Entstehung einer Fluoreszenz oder eine Fluoreszenzlöschung, feststellbar ist, wenn sich im Polymermaterial des Sensors die Aktivität, beziehungsweise Konzentration der Protonen aufgrund der Adduktbildung zwischen dem aromatischen, beziehungsweise heteroaromatischen Aldehyd und den Bisulfitanionen ändert, wobei diese Aenderung der Aktivität, beziehungsweise Konzentration der Protonen, in dem Polymermaterial des Sensors gegebenenfalls auf eine Coextraktion der Protonen, zusammen mit dem zu bestimmenden Bisulfitanion, zurückzuführen ist.

Als weiterer gegenüber Protonen selektiver lipophiler Chromoionophor der Formel III wurde in den erfindungsgemässen Sensoren ein solcher verwendet, in welchem der Rest

R' ein direkt an das Stickstoffatom gebundener Rest der folgenden Formel

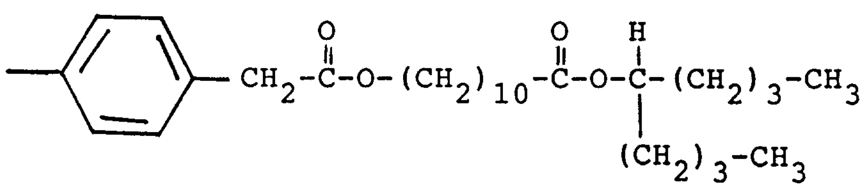

gebunden ist.

In jüngster Zeit hat es sich herausgestellt, dass es bei der Bestimmung von Schwefeldioxyd in einem gasförmigen Medium, insbesondere bei der Bestimmung von Schwefeldioxyd in einem trockenen oder nahezu trockenen gasförmigen Medium, vorteilhaft ist, einen entsprechenden Sensor zu verwenden, in welchem das Polymermaterial eines der weiter vorne erwähnten Copolymerisate ist, in welchem 5 - 25 Mol.-% der Monomereinheiten des Copolymerisates einen oder mehrere hydrophile Substituenten tragen, die Hydroxylgruppen und/oder Carboxylgruppen sind, oder indem man ein entsprechendes Homopolymerisat oder Copolymerisat verwendet, das frei von derartigen hydrophilen Gruppen ist, wobei jedoch in diesem Polymermaterial als weitere Komponente noch ein lipophile Eigenschaften aufweisender Alkohol vorhanden ist.

Speziell bevorzugte Polymermaterialien des Sensors, die zu diesem Zwecke eingesetzt werden, sind die weiter vorne erwähnten Copolymerisate aus Polyvinylchlorid und Polyvinylalkohol, insbesondere diejenigen, in denen 7 - 19 Mol-%, insbesondere 11 - 14 Mol-%, der Monomereinheiten des Copolymerisates von Vinylalkohol stammen, beziehungsweise solche Homopolymerisate des Vinylchlorides, die als weitere Komponente einen lipophilen Alkohol enthalten, wobei bevorzugte lipophile Eigenschaften aufweisende Alkoholkomponenten geradkettige aliphatische Alkohole mit mindestens acht Kohlenstoffatomen sind, oder solche Alkohole, die eine mindestens acht Kohlenstoffatome aufweisende aliphatische Hauptkette und allenfalls noch Verzweigungen aufweisen. Vorzugsweise sind die Alkohole primäre Alkohole, in welchen die Hydroxylgruppe an ein endständiges Kohlenstoffatom gebunden ist, und als spezielle Beispiele seien das n-Dodekanol-1 und das Dihydrophytol genannt, das durch Hydrierung der Doppelbindung des Naturstoffs Phytol der folgenden Strukturformel

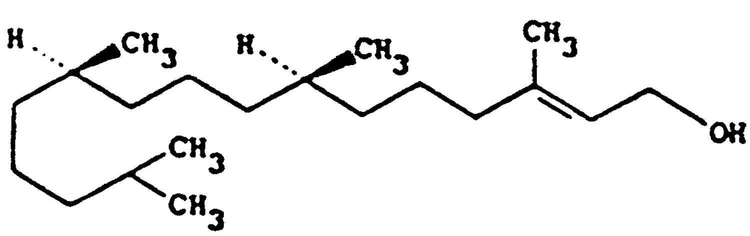

erhältlich ist.

Die verwendeten, lipophile Eigenschaften aufweisenden Alkohole sind in Wasser praktisch unlöslich, in dem Polymermaterial des Sensors jedoch gut löslich.

Während solche Sensoren, deren Polymermaterial frei von Hydroxylgruppen ist, beziehungsweise die keinen lipophilen Alkohol als weitere Komponente enthalten, praktisch nur zur Bestimmung von Schwefeldioxyd in wässrigen Medien und feuchten Gasen geeignet sind, weil das in der Gasphase enthaltene Wasser als Mediator für das Eindringen des zu bestimmenden Schwefeldioxydes in die Membranphase

benötigt wird, können die oben erwähnten Sensoren, deren Polymermaterial Hydroxylgruppen enthält, beziehungsweise die als weitere Komponente einen lipophilen Alkohol enthalten, auch zur Bestimmung von Schwefeldioxyd in trockenen Gasen herangezogen werden, weil durch die im Polymermaterial des Sensors vorhandenen Hydroxylgruppen das Uebertreten des Schwefeldioxydes von der Gasphase in die Membranphase proportional zu der Konzentration, beziehungsweise dem Partialdruck des Schwefeldioxydes in der Gasphase erfolgt. Es kann angenommen werden, dass dieser Uebertritt des in der Gasphase enthaltenen trockenen Schwefeldioxydes in die Membranphase über die intermediäre Bildung eines Monoalkylesters der schwefeligen Säure mit den alkoholischen Hydroxylgruppen in der Membranphase erfolgt.

Es wurden verschiedene Sensoren in Membranform getestet, die 29 - 32,5 Gew.-% an einem Hydroxylgruppen enthaltenden Polyvinylchlorid und 62 - 63,5 Gew.-% an dem Weichmacher 2-Nitrophenyl-octyl-äther enthielten. Des weiteren enthielten die getesteten Membranen als Sensor für das in der Gasphase enthaltene Schwefeldioxyd den aromatischen Aldehyd der Formel I, in welchem der Rest R der n-Octadecylrest war. Die Membranen enthielten diesen Sensor in einer Menge von 0,10 - 0,20 Mol.

Entsprechende Sensoren zur optischen Bestimmung von Schwefeldioxyd in der Gasphase enthielten als weitere Komponente einen gegenüber Protonen selektiven lipophilen Chromoionophor der weitere vorne angegebenen Formel III. Getestet wurden solche Sensoren, die einen lipophilen pH-Indikator der Formel III enthielten, wobei in der einen Testreihe der Rest R' dieses lipophilen Chromoionophors ein direkt an das Stickstoffatom gebundener Octadecylrest war, während in der anderen Testreihe, der an das Stickstoffatom gebundene Rest R', der direkt an das Stickstoff gebundene Phenylrest der oben angegebenen Struktur war, der in der Parastellung mit dem langkettigen aliphatischen Rest substituiert war, der in seiner Kette durch die angegebenen zwei Estergruppen unterbrochen war. Dieser zuletzt genannte Chromoionophor weist weniger stark basische Eigenschaften auf als der zuerst genannte, nur aliphatisch substituierte Chromoionophor. Die entsprechenden Tests zeigten, dass man mit Hilfe eines stärker basische Eigenschaften aufweisenden Chromoionophors die Empfindlichkeit entsprechender Membranen für die Bestimmung von Schwefeldioxyd steigern kann.

Bekanntlich enthalten Rauchgase als weitere Komponente Kohlendioxyd. Es wurden daher Tests durchgeführt, um festzustellen, ob das in Rauchgasen anwesende Kohlendioxyd die Bestimmung von Schwefeldioxyd stört. Diese Tests zeigten, dass bei bis zu 50 Vol.-% an $CO_2$ keine derartigen Störungen auftraten.

Bekanntlich enthalten Rauchgase häufig auch noch Stickoxyde, und es ist bekannt, dass Stickstoffdioxyd mit Aminen reagiert. Entsprechende Tests zeigten, dass solche Sensoren, die als weitere Komponente einen lipophilen pH-Indikator der Formel III enthielten, tatsächlich mit Abgasen, die Stickstoffdioxyd enthielten, in irreversibler Weise reagierten, und somit waren derartige Sensoren nicht geeignet um Schwefelioxyd in solchen Abgasen einer Verbrennungsreaktion zu bestimmen, die als weitere Komponente Stickstoffdioxyd enthielten. Im Gegensatz dazu weisen entsprechende Sensoren, die als lipophilen Chromoionophor die Verbindungen der weiter vorne angegebenen Formel IV enthielten, diesen Nachteil nicht auf.

Ein weiterer Gegenstand der vorliegenden Erfindung ist ein Verfahren zur Herstellung des erfindungsgemässen Sensors, wobei dieses dadurch gekennzeichnet ist, dass man das Polymermaterial und den mit Sulfitanionen, beziehungsweise Bisulfitanionen Addukte bildenden aromatischen, beziehungsweise heteroaromatischen Aldehyd und allenfalls vorhandene weitere Komponenten des Sensors in einem flüchtigen, organischen Lösungsmittel löst und durch Abdampfen des Lösungsmittels den Sensor herstellt.

Vorzugsweise werden nach diesem Verfahren gegenüber Sulfitanionen, beziehungsweise Bisulfitanionen, empfindliche Sensoren in Form von entsprechenden Membranen einer Dicke von etwa 3 µm nach bereits früher beschriebenen Verfahren unter Verwendung von Quarzglasplatten (Herasil) der Firma Willi Möller AG hergestellt.

Die Erfindung sei nun anhand von Beispielen näher erläutert.

Beispiel 1

Herstellung eines lipophile Eigenschaften aufweisenden, adduktbildenden Aldehydes

Der gemäss diesem Beispiel hergestellte neue lipophile Aldehyd weist die Formel I

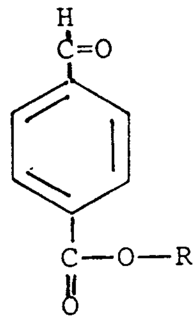

I

auf, wobei in dieser Formel der Rest R der n-Octadecylrest ist.

1. Herstellung des 4-Formylbenzosäure-chlorides

Eine Lösung aus 1,5 g (10 mmol) an 4-Carboxybenzaldehyd in 2 ml Thionylchlorid und 20 ml Toluol wurde gerührt und 90 Minuten lang auf Rückflusstemperatur erhitzt. Anschliessend wurde das Lösungsmittel und der Ueberschuss des Thionylchlorides abgedampft und der Rückstand unter Hochvakuum getrocknet. Man erhielt dabei 1,65 g (9,8 mmol) des im Titel genannten Produktes, entsprechend einer Ausbeute von 97,9% der theoretischen Ausbeute. Dieses Produkt wurde ohne weitere Reinigung in der nächsten Verfahrensstufe eingesetzt.

2. Herstellung des 4-Formylbenzoesäure-octadecylesters

Zu einer Lösung von 1,6 g (9,5 mmol) des gemäss Stufe 1 hergestellten 4-Formylbenzoesäurechlorides und 2,6 g (9,5 mmol) an 1-Octadecanol in 30 ml Methylenchlorid, gab man 0,96 g (9,5 mmol) an Triethylamin.

Die Reaktionsmischung wurde bei Zimmertemperatur während 30 Minuten gerührt, dann mit 100 ml Methylenchlorid verdünnt und mit 200 ml Wasser gewaschen. Die organische Phase wurde über Magnesiumsulfat getrocknet. Anschliessend wurde das Lösungsmittel abgedampft und der Rückstand durch Flashchromatographie auf Silicagel (Laufmittel Hexan + Essigsäureethylester im Volumenverhältnis von 9:1) gereinigt. Dann wurde aus Hexan umkristallisiert, wobei man 1,5 g des reinen Produktes der angegebenen Formel I erhielt.

Für das Produkt der Summenformel $C_{26}$ $H_{43}$ $O_3$ ergab die Elementaranalyse die folgenden Ergebnisse:

| | | |
|---|---|---|
| berechnet: | C = 77,56 | H = 10,51 |
| gefunden: | C = 77,54 | H = 10,59. |

Das kernmagnetische Resonanzspektrum [$^1$H-NMR(300 MHz, $CDCl_3$)] und das Infrarotspektrum, aufgenommen in Chloroform, sowie das Massenspektrum, bestätigten die Konstitution der Verbindung der Formel I.

Beispiel 2

Herstellung von erfindungsgemässen Sensoren in Form von Membranen

Die hergestellten Membranen enthielten als Adduktbildner für schwefelige Säure, Bisulfitanionen oder Sulfitanionen, den lipophilen Benzaldehyd der Formel I, der nach dem Verfahren gemäss Beispiel 1 hergestellt wurde.

Des weiteren enthielten sämtliche Membranen als lipophilen, gegenüber Protonen selektiven Chromoionophor, den neuen Chromoionophor der weiter vorne angegebenen Formel III, in welchem R' ein 18 Kohlenstoffatome aufweisender Alkylrest ist, nämlich der 3-(n-Octyl)-n-decylrest.

Die Membranen 1, 2 und 3 enthielten als Kunststoff ein geringe Anteile an Hydroxygruppen aufweisendes Polyvinylchlorid, die Membran 4 hingegen Polyvinylchlorid.

Die Membranen 1, 2 und 3 enthielten als Weichmacher den 2-Nitrophenyl-octylether.

Die Membran 4 enthielt als Weichmacher das Bis(2-ethylhexyl)-sebacat.

| Bestandeil | Membran 1 | Membran 2 | Membran 3 | Membran 4 |
|---|---|---|---|---|
| Kunstsoff | 31,4 Gew.% | 31.4 Gew.% | 28,1 Gew.% | 29,6 Gew.% |
| Weichmacher | 64,4 " | 65,5 " | 62,6 " | 65,9 " |
| Adduktbildner lipophiler | 0,079 | 0,027 | 0,027 | 0,073 |
| pH-Indikator | 0,038 | 0,041 | 0,035 | 0,042 |

In dieser Tabelle sind die Mengen des Adduktbildners und des pH-Indikators in Mol/kg Membran angeführt.

Sämtliche Membranen 1, 2, 3 und 4 zeigten bei Kontakt mit einer wässrigen Lösung von Bisulfit eine Veränderung der Absorption im sichtbaren Bereich, und zwar in Abhängigkeit von der Konzentration des Bisulfits in der wässrigen Lösung. Sie war dementsprechend zur quantitativen Bestimmung von Sulfitanionen geeignet.

Beispiel 3

Bestimmung der Selektivität der Membranen

Die Membranen 3 und 4 des vorangegangenen Beispiels 2 wurden auf ihre Selektivität für Sulfitanionen gegenüber anderen, in der wässrigen Lösung enthaltenen Anionen getestet.

Beide Membranen Zeigten eine hohe Selektivität für $HSO_3^-$ gegenüber Chlorid, denn der entsprechende Wert der Optodenmembran, ausgedrückt als

$$\log K^{Opt}_{HSO_3^-/Anion^-}$$

betrug in demjenigen Fall, dass das allenfalls störende, ebenfalls anwesende Anion, $Cl^-$ war, -2,3.

Beide Membranen hatten ferner eine Selektivität für $HSO_3^-$ im Vergleich zu Nitrat, nämlich der entsprechende Wert, ausgedrückt als

$$\log K^{Opt}_{HSO_3^-/Anion^-}$$

war für das Nitratanion im Falle der Membran 3, - 1,7, und im Falle der Membran 4, -0,7.

Die Membran 3 zeigte ferner eine geringfügige Selektivität für Bisulfit gegenüber Rhodanid, die Membran 4 hatte im Gegensatz dazu eine höhere Selektivität für Rhodanid als für Sulfit. Sowohl die Membran 3 als auch die Membran 4, zeigte keine Selektivität für Perchloratanionen gegenüber Bisulfitanionen.

Sämtliche Membranen zeigten ein sehr rasches Ansprechen, und die Aenderung des Absorptionsspektrums war auch kurze Zeit nach dem Kontakt mit sulfitfreien Lösungen wieder rückgängig gemacht.

Beispiel 4

Anhand dieses Beispiels wird die Herstellung einer Membran beschrieben, die auch zur Bestimmung von Schwefeldioxyd im einer im wesentlichen wasserfreien Gasphase geeignet ist.

Die hier getesteten Membranen enthielten als Kunststoff ein Copolymerisat aus Vinylchlorid und Vinylalkohol mit einem Monomeren-Verhältnis von Vinylchlorid zu Vinylalkohol von 6,4. Als adduktbildenden Aldehyd enthielten sie den gemäss Beispiel 1 hergestellten lipophilen Aldehyd der Formel I, in welchem R der n-Octadecylrest war.

Des weiteren enthielten die Membranen als Weichmacher den 2-Nitrophenyl-octyl-äther und als lipophilen pH-Indikator den weitere vorne genannten pH-Indikator, in welchem an das Stickstoffatom der Phenylrest gebunden ist, der in der Parastellung mit dem erwähnten, durch zwei Estergruppen unterbrochenen langkettigen, aliphatischen Rest substituiert ist.

Einige der getesteten Membranen zeigten bei der Bestimmung von Schwefeldioxyd in einem Schwefeldioxyd enthaltenden trockenen, beziehungsweise feuchten Gasgemisch, eine lange Ansprechzeit von manchmal mehr als 20 Minuten. Es wurde angenommen, dass diese lange Ansprechzeit auf die relativ langsame Adduktbildung von Hydrogensulfit an den Aldehyd zurückzuführen ist. Ueberraschenderweise zeigte es sich, dass durch die Einverleibung eines lipophile Eigenschaften aufweisenden Amines, insbesondere eines sekundären Amines, die Ansprechzeit wesentlich verkürzt werden konnte, im allgemeinen auf 5 - 12 Minuten. Als lipophile Eigenschaften aufweisendes sekundäres Amin hat sich zu diesem Zweck das Diundecylamin besonders gut geeignet, wobei dieses in der Membran in einer Menge von 20 Mol.-%, bezogen auf den in der Membran enthaltenen, addukbildenden aromatischen Aldehyd eingesetzt wurde.

Die in diesem Beispiel getesteten Membranen 5 und 6 hatten die in der folgenden Tabelle angegebene Zusammensetzung, wobei der Kunststoff und der Weichmacher in dieser Tabelle in Gew.-% angeführt sind, während die vorhandenen Mengen an dem adduktbildenden Aldehyd, dem lipophilen pH-Indikator und dem allenfalls vorhandenen lipophilen Amin, in Mol angegeben sind.

Tabelle

| Bestandteil | Membran 5 | Membran 6 |
|---|---|---|
| Kunststoff | 32,2 Gew.-% | 29,1 Gew.-% |
| Weichmacher adduktbildender | 63,3 Gew.-% | 62,6 Gew.-% |
| Aldehyd lipophiler | 0,107 Mol | 0,178 Mol |
| pH-Indikator | 0,023 Mol | 0,032 Mol |
| Diundecylamin | - | 0,036 Mol |

**Patentansprüche**

1. Sensor zur Bestimmung von Sulfiten, beziehungsweise schwefeliger Säure, beziehungsweise Schwefeldioxid in flüssigen oder gasförmigen Medien, dadurch gekennzeichnet, dass dieser Sensor in einem Polymermaterial als Adduktbildner für Sulfitanionen, beziehungsweise Bisulfitanionen einen aromatischen, beziehungsweise heteroaromatischen Aldehyd enthält, vorzugsweise einen entsprechenden aromatischen, beziehungsweise heteroaromatischen Aldehyd, bei welchem an den aromatischen, beziehungsweise heteroaromatischen Rest mindestens ein Substituent mit lipophilen Eigenschaften gebunden ist.

2. Sensor gemäss Anspruch 1, dadurch gekennzeichnet, dass der aromatische Kern des Aldehydes ein Benzolkern, ein Naphthalinkern, ein Anthracen oder Phenanthrengerüst ist oder dass der heteroaromatische Aldehyd einen Sauerstoff, beziehungsweise Schwefel enthaltenden heterocyclischen Kern aufweist, insbesondere einen Thiophenkern.

3. Sensor gemäss Anspruch 1 oder 2, dadurch gekennzeichnet, dass an den aromatischen, beziehungsweise heteroaromatischen Kern des Aldehydes mindestens ein lipophiler Rest gebunden ist, der in seiner Struktur mindestens einen aliphatischen Rest mit mindestens sechs Kohlenstoffatomen, cycloaliphatischen Rest, aromatischen oder araliphatischen Rest aufweist, wobei dieser lipophile Substituent direkt oder über eine Ethergruppierung, eine Thioethergruppierung, eine Azogruppe, eine Carbonsäureester- oder Sulphonsäureestergruppierung an den aromatischen, beziehungsweise heteroaromatischen Rest gebunden ist.

4. Sensor gemäss Anspruch 3, dadurch gekennzeichnet, dass der aromatische Aldehyd ein Benzaldehyd ist, bei welchem an den Benzolkern ein Alkylrest mit 10 - 24 Kohlenstoffatomen, direkt, über eine Ethergruppe, eine Carbonsäureestergruppe oder eine Sulphonsäureestergruppe gebunden ist, wobei dieser lipophile Substituent vorzugsweise in der Orthostellung oder in der Parastellung zu der Aldehydgruppe des Benzaldehydes gebunden ist, und die entsprechenden Carbonsäureester, beziehungsweise Sulphonsäureestergruppierungen vorzugsweise über die CO-Gruppe, beziehungsweise die $SO_2$-Gruppe, an den Benzolkern gebunden sind.

5. Sensor gemäss Anspruch 4, dadurch gekennzeichnet, dass der lipophil substituierte Benzaldehyd die folgende Formel I, beziehungsweise II aufweist,

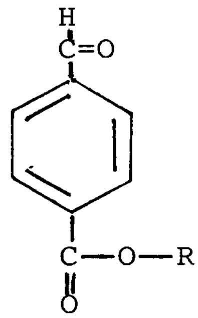 I

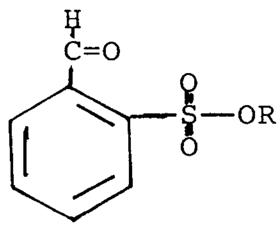 II

wobei in diesen Formeln R ein Alkylrest mit 10 - 24 Kohlenstoffatomen, vorzugsweise ein entsprechenden geradkettiger Alkylrest, beispielsweise der n-Octadecylrest ist.

**6.** Sensor gemäss einem der Ansprüche 1 bis 5, dadurch gekennzeichnet, dass das Polymermaterial des Sensors ein Homopolymerisat oder Copolymerisat ist, das Monomereinheiten aufweist, die von Alkenen oder Alkinen mit einer oder mehreren Mehrfachbindungen stammen, wobei diese Alkene oder Alkine gegebenenfalls einen oder mehrere Substituenten tragen, die Chloratome, Bromatome, Arylreste, Carbonsäureestergruppen, Carbonsäureamidgruppen, Nitrilgruppen, veresterte oder veretherte Hydroxylgruppen, Ketogruppen, freie oder acetalysierte Aldehydgruppen sind und/ oder das Copolymerisat Polyesteranteile, Polyurethananteile, Polyamidanteile und/oder Polycarbonatanteile enthält und wobei das Polymermaterial frei von hydrophilen Substituenten ist oder geringe Anteile, vorzugsweise 5-25 Mol-% der Monomereinheiten des Copolymerisates ein oder mehrere hydrophile Substituenten tragen, die Hydroxylgruppen oder Carboxylgruppen sind, und wobei speziell bevorzugte Polymermaterialien des Sensors Polyvinylhalogenid oder Polyvinylidenhalogenid Homopolymersiate oder Copolymerisate sind, insbesondere solche, in welchen das Halogenid Brom und/oder vorzugsweise Chlor ist, und wobei in den entsprechenden Copolymerisaten vorzugsweise 5-25 Mol-% der Monomereinheiten Hydroxylgruppen und/oder Carboxylgruppen als Substituenten tragen und gegebenenfalls in den Copolymerisaten noch zusätzlich Estergruppierungen, Säureamidgruppierungen, Nitrilgruppierungen, Carbonatgruppierungen und/oder Urethangruppierungen vorhanden sind.

**7.** Sensor gemäss einem der Ansprüche 1 bis 6, dadurch gekennzeichnet, dass er ausserdem einen Weichmacher enthält, vorzugsweise einen lipophile Eigenschaften aufweisenden Weichmacher, insbesondere einen Esterweichmacher oder einen Etherweichmacher, beispielsweise einen Esterweichmacher auf Basis eines Dicarbonsäurediesters oder eines Tetracarbonsäuretetraesters, in welchem der esterbildende Alkohol vorzugsweise mindestens 5 Kohlenstoffatome aufweist, und wobei bevorzugte Etherweichmacher solche auf Basis eines aromatisch-aliphatischen Ethers sind, insbesondere ein Nitrophenylalkylether mit 5-15 Kohlenstoffatomen in der Alkylgruppe.

**8.** Sensor gemäss einem der Ansprüche 1 bis 7, dadurch gekennzeichnet, dass er zusätzlich in dem Polymermaterial ein Salz enthält, welches ein Kation mit lipophilen Eigenschaften, beispielsweise ein Ammoniumkation aufweist, bei dem mindestens eine Alkylkette mit mindestens 8 Kohlenstoffatomen an das Stickstoffatom des Ammoniumions gebunden ist, beispielsweise ein quaternäres Ammoniumsalz, bei dem drei derartige langkettige Alkylgruppen an das Stickstoffatom gebunden sind, wobei bei Kontakt des Sensors mit einer wässrigen Lösung, die Sulfitanionen, beziehungsweise Bisulfitanionen enthält, ein Austausch der im Sensor vorhandenen Anionen des Salzes mit lipophilem Kation gegen die

Sulfit-, beziehungsweise Bisulfitanionen der wässrigen Lösung stattfindet.

**9.** Sensor gemäss einem der Ansprüche 1 bis 8, dadurch gekennzeichnet, dass er ein Sensor zur optischen Bestimmung von schwefeliger Säure, Sulfit- bzw. Bisulfitanionen in wässrigen Medien ist, wobei

entweder der in dem Sensor enthaltene lipophile Eigenschaften aufweisende aromatische, bzw. heteroaromatische Aldehyd eine chromophore Gruppe oder eine solche Gruppe aufweist, die eine Fluoreszenz hervorruft, sodass bei der Adduktbildung zwischen den Sulfitanionen, bzw. Bisulfitanionen und dem aromatischen, bzw. heteroaromatischen Aldehyd des Sensors eine Verschiebung der Absorption im ultravioletten Lichtbereich oder im sichtbaren Lichtbereich, oder das Entstehen einer Fluoreszenz oder die Löschung einer Fluoreszenz auftritt oder dass

der in dem Sensor enthaltene adduktbildende aromatische, bzw. heteroaromatische Aldehyd keine chromophore Gruppe aufweist und keine eine Fluoreszenz bewirkende Gruppe aufweist, und dass der Sensor als weitere Komponente einen gegenüber Protonen selektiven lipophilen Chromoionophor enthält, also einen lipophile Eigenschaften aufweisenden pH-Indikator, der eine Farbänderung im sichtbaren Bereich der Wellenlänge zeigt,

oder mit dem Entstehen oder der Löschung einer Fluoreszenz reagiert, wenn sich im Polymermaterial des Sensors die Aktivität, bzw. die Konzentration der Protonen aufgrund der Adduktbildung zwischen dem aromatischen, bzw. heteroaromatischen Aldehyd und der schwefeligen Säure, bzw. den Bisulfitanionen ändert, oder wobei allenfalls die Aenderung der Aktivität, bzw. Konzentration der Protonen in dem Polymermaterial aufgrund einer Koextraktion von Bisulfitanionen und Protonen aus der wässrigen Lösung aufgrund der Adduktbildung auftritt.

**10.** Sensor gemäss einem der Ansprüche 1 bis 9, dadurch gekennzeichnet, dass er auch zur Bestimmung von Schwefeldioxyd in gasförmigen Medien geeignet ist, die einen geringen Wassergehalt aufweisen oder trocken sind, und dass

entweder das Polymermaterial des Sensors ein Copolymerisat ist, das geringe Anteile an hydrophilen Substituenten trägt, vorzugsweise 5 - 25 Mol-% der Monomereinheiten, einen oder mehrere Substituenten tragen, die Hydroxylgruppen oder Carboxylgruppen sind, oder

dass das Polymermaterial des Sensors frei von hydrophilen Gruppen ist, und der Sensor als weitere Komponente einen lipophilen Alkohol enthält, vorzugsweise einen Alkohol mit einer aliphatischen Kette mit mindestens 8 Kohlenstoffatomen, insbesondere einen entsprechenden primären Alkohol.

**11.** Verfahren zur Herstellung des Sensors gemäss einem der Patentansprüche 1 bis 10, dadurch gekennzeichnet, dass man das Polymermaterial und den mit Sulfitanionen, beziehungsweise Bisulfitanionen Addukte bildenden aromatischen, beziehungsweise heteroaromatischen Aldehyd und allenfalls vorhandene weitere Komponenten des Sensors in einem flüchtigen, organischen Lösungsmittel löst und durch Abdampfen des Lösungsmittels den Sensor herstellt.

**12.** Neue lipophil substituierte Benzaldehyde, die als Adduktbildner in den Sensoren gemäss Anspruch 5 einsetzbar sind, dadurch gekennzeichnet, dass sie die Formel I, beziehungsweise II

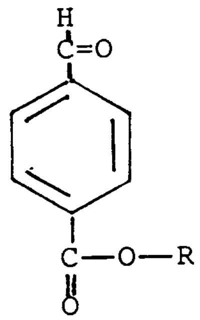

I

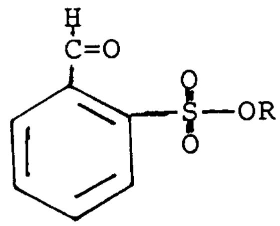

II

aufweisen, wobei in diesen Formeln R ein Alkylrest mit 10 bis 24 Kohlenstoffatomen ist.

**13.** Neue lipophile, gegenüber Protonen selektive Chromoionophore zur Herstellung von Sensoren zur optischen Bestimmung von schwefeliger Säure, Sulfit-, bzw. Bisulfitanionen, gemäss Anspruch 9, zweiter Variante, dadurch gekennzeichnet, dass diese, lipophile Eigenschaften aufweisende Chromoionophore die folgende Formel IV

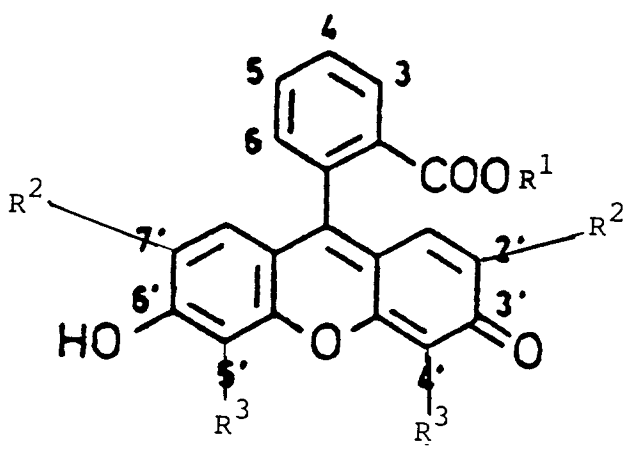

IV

aufweisen, wobei in dieser Formel $R^1$ ein lipophiler Rest, vorzugsweise ein aliphatischer Rest mit 10-40 Kohlenstoffatomen ist, und die Substituenten

$R^2$ und $R^3$ unabhängig voneinander Wasserstoff, Brom oder Jod bedeuten.